# EUROPEAN PATENT APPLICATION

(11) **EP 3 170 591 A1**
(43) Date of publication of application: **24.05.2017**
(21) Application number: 16199370.4
(22) Date of filing: 17.11.2016
(51) Int. Cl.: B22F 3/105, C04B 35/64, G01N 29/24, G01N 29/22, B29C 67/00, G01N 29/04

(54) **REAL-TIME VIBRATION MONITORING OF AN ADDITIVE MANUFACTURING PROCESS**

(30) Priority: 19.11.2015 US 201514946278
(71) Applicant: General Electric Company, Schenectady, NY 12345 (US)
(72) Inventor: GOLD, Scott Alan, West Chester, OH Ohio 45069 (US); KENNEY, Patrick Michael, Cincinnati, OH Ohio 45215 (US); LEVINE, Rachel Wyn, West Chester, OH Ohio 45069 (US)
(74) Representative: Pöpper, Evamaria

(57) **Abstract**

A method of monitoring an additive manufacturing process in which a layer of powdered material is deposited in a recoating process so as to define a build surface (54), and a directed energy source (24) is used to create a weld pool in the build surface (54) and selectively fuse the powdered material to form a workpiece (W). The method includes: measuring a vibration signal profile generated by the recoating process; and controlling at least one aspect of the additive manufacturing process in response to the measured vibration signal profile.

## Description

### BACKGROUND OF THE INVENTION

This invention relates generally to additive manufacturing, and more particularly to apparatus and methods for providing real-time vibration monitoring in additive manufacturing.

Additive manufacturing is a process in which material is built up layer-by-layer to form a component. Additive manufacturing is limited only by the position resolution of the machine and not limited by requirements for providing draft angles, avoiding overhangs, etc. as required by casting. Additive manufacturing is also referred to by terms such as "layered manufacturing," "reverse machining," "direct metal laser melting" (DMLM), and "3-D printing." Such terms are treated as synonyms for purposes of the present invention.

One common type of additive manufacturing machine includes a blade-like recoater to apply powdered material over a build surface prior to laser fusing.

A common cause of build crashes in this kind of machine is contact between the recoater blade and the workpiece being built as internal stresses build up causing the workpiece to warp or lift from a supporting build plate. One problem with such machines it that there is currently no simple means of monitoring this stress build up or the severity of contact between the workpiece and the recoater during the build process.

Another problem is that prior art additive manufacturing processes typically require a post-build inspection process such as computerized tomography ("CT") to verify the integrity of the build. While effective, this requires undesirable extra time and cost and eliminates the possibility of taking corrective actions during the build.

### BRIEF DESCRIPTION OF THE INVENTION

At least one of these problems is addressed by a method of monitoring vibration during an additive manufacturing build process.

According to one aspect of the technology described herein, a method is provided for monitoring an additive manufacturing process in which a layer of powdered material is deposited in a recoating process so as to define a build surface, and a directed energy source is used to selectively fuse the powdered material to form a workpiece. The method includes: measuring a vibration signal profile generated by the recoating process; and controlling at least one aspect of the additive manufacturing process in response to the measured vibration signal profile.

According to one aspect of the technology described herein, a method of making a workpiece includes: using a moving recoater to deposit a powdered material so as to define a build surface; directing a focused energy beam from a directed energy source to selectively fuse the powdered material in a pattern corresponding to a cross-sectional layer of the workpiece; measuring a vibration signal profile generated by the recoater; and controlling at least one aspect of making the workpiece in response to the measured vibration signal profile.

### BRIEF DESCRIPTION OF THE DRAWINGS

The invention may be best understood by reference to the following description taken in conjunction with the accompanying drawing figures in which:
FIG. 1 is a schematic cross-sectional view of an exemplary additive manufacturing apparatus;
FIG. 2 is an enlarged view of a portion of FIG. 1;
FIG. 3 is an enlarged view of a warped workpiece being built by the apparatus of FIG. 1;
FIG. 4 is an enlarged view of a warped workpiece being built by the apparatus of FIG. 1;
FIG. 5 is a baseline vibration signal profile of a "known good" workpiece build process;
FIG. 6 is a vibration signal profile showing a small or incipient defect in workpiece during a build process; and
FIG. 7 is a vibration signal profile showing a large defect in a workpiece during a build process.

### DETAILED DESCRIPTION OF THE INVENTION

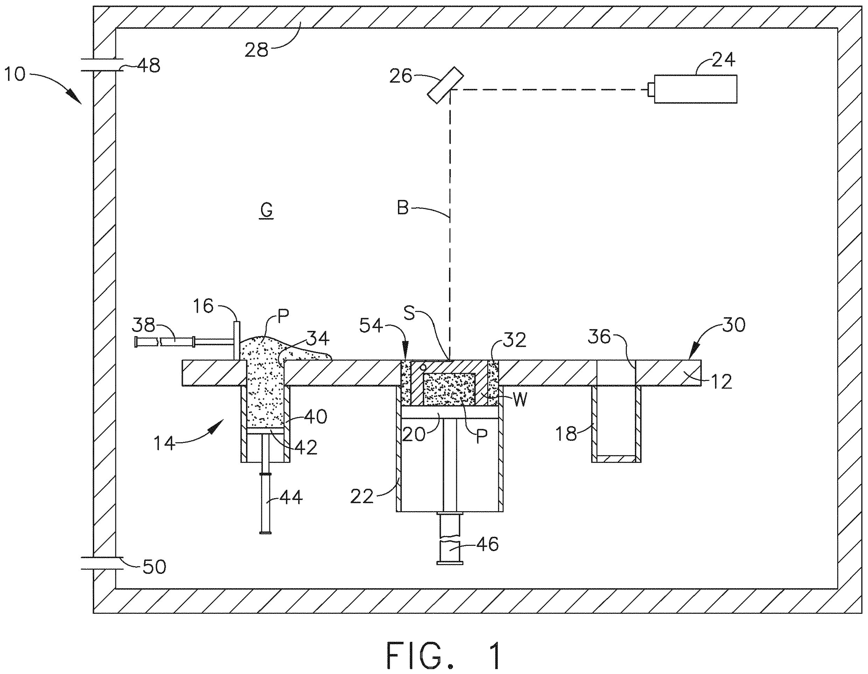

Referring to the drawings wherein identical reference numerals denote the same elements throughout the various views, FIG. 1 illustrates schematically an apparatus 10 for carrying out an additive manufacturing method. The basic components are a table 12, a powder supply 14, a scraper or recoater 16, an overflow container 18, a build platform 20 surrounded by a build chamber 22, a directed energy source 24, and a beam steering apparatus 26, all surrounded by an enclosure 28. Each of these components will be described in more detail below.

The table 12 is a rigid structure defining a planar worksurface 30. The worksurface 30 is coplanar with and defines a virtual workplane. In the illustrated example it includes a build opening 32 communicating with the build chamber 22 and exposing the build platform 20, a supply opening 34 communicating with the powder supply 14, and an overflow opening 36 communicating with the overflow container 18.

The recoater 16 is a rigid, laterally-elongated structure that lies on the worksurface 30. It is connected to an actuator 38 operable to selectively move the recoater 16 along the worksurface 30. The actuator 38 is depicted schematically in FIG. 1, with the understanding devices such as pneumatic or hydraulic cylinders, ballscrew or linear electric actuators, and so forth, may be used for this purpose.

The powder supply 14 comprises a supply container 40 underlying and communicating with the supply opening 34, and an elevator 42. The elevator 42 is a plate-like structure that is vertically slidable within the supply container 40. It is connected to an actuator 44 operable to selectively move the elevator 42 up or down. The actuator 44 is depicted schematically in FIG. 1, with the understanding that devices such as pneumatic or hydraulic cylinders, ballscrew or linear electric actuators, and so forth, may be used for this purpose. When the elevator 42 is lowered, a supply of powder "P" of a desired composition (for example, metallic, ceramic, and/or organic powder) may be loaded into the supply container 40. When the elevator 42 is raised, it exposes the powder P above the worksurface 30. It should be appreciated that other suitable forms and/or types of powder supply 14 may be used. For example, the powder supply 14 may be positioned above the worksurface 30 and include a powder container that drops powder onto the worksurface 30 at a pre-determined flow rate.

The build platform 20 is a plate-like structure that is vertically slidable below the build opening 32. It is connected to an actuator 46 operable to selectively move the build platform 20 up or down. The actuator 46 is depicted schematically in FIG. 1, with the understanding that devices such as pneumatic or hydraulic cylinders, ballscrew or linear electric actuators, and so forth, may be used for this purpose. When the build platform 20 is lowered into the build chamber 22 during a build process, the build chamber 22 and the build platform 20 collectively surround and support a mass of powder P along with any components being built. This mass of powder is generally referred to as a "powder bed", and this specific category of additive manufacturing process may be referred to as a "powder bed process".

The overflow container 18 underlies and communicates with the overflow opening 36, and serves as a repository for excess powder P.

The directed energy source 24 may comprise any known device operable to generate a beam of suitable power and other operating characteristics to melt and fuse the metallic powder during the build process, described in more detail below. For example, the directed energy source 24 may be a laser. Other directed-energy sources such as electron beam guns are suitable alternatives to a laser.

The beam steering apparatus 26 may include one or more electromagnets, mirrors, prisms, and/or lenses and provided with suitable actuators, and arranged so that a beam "B" from the directed energy source 24 can be focused to a desired spot size and steered to a desired position in plane coincident with the worksurface 30. For purposes of convenient description, this plane may be referred to as an X-Y plane, and a direction perpendicular to the X-Y plane is denoted as a Z-direction (X, Y, and Z being three mutually perpendicular directions). The beam B may be referred to herein as a "build beam".

The enclosure 28 serves to isolate and protect the other components of the apparatus 10. It may be provided with a flow of an appropriate shielding gas "G", for example nitrogen, argon, or other gases or gas mixtures. The gas G may be provided as a static pressurized volume or as a dynamic flow. The enclosure 28 may be provided with inlet and outlet ports 48, 50 respectively for this purpose.

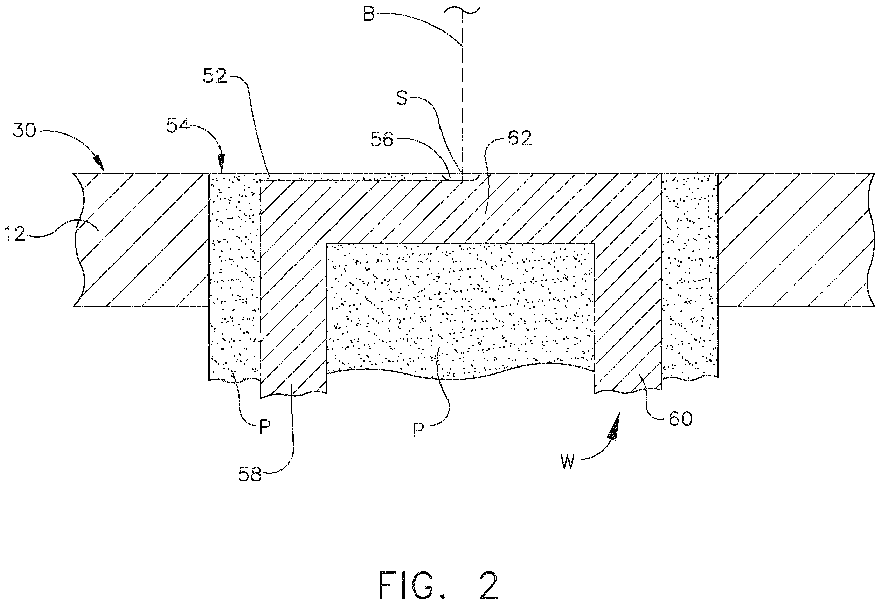

The basic build process for a workpiece W using the apparatus described above is as follows. The build platform 20 is moved to an initial high position. The build platform 20 is lowered below the worksurface 30 by a selected layer increment. The layer increment affects the speed of the additive manufacturing process and the resolution of the workpiece W. As an example, the layer increment may be about 10 to 50 micrometers (0.0003 to 0.002 in.). Powder "P" is then deposited over the build platform 20 for example, the elevator 42 of the supply container 40 may be raised to push powder through the supply opening 34, exposing it above the worksurface 30. The recoater 16 is moved across the worksurface to spread the raised powder P horizontally over the build platform 20 (known as the "recoating process"). Any excess powder P drops through the overflow opening 36 into the overflow container 18 as the recoater 16 passes from left to right. Subsequently, the recoater 16 may be moved back to a starting position. The leveled powder P may be referred to as a "build layer" 52 and the exposed upper surface thereof may be referred to as a "build surface" 54 (see FIG. 2).

The directed energy source 24 is used to melt a two-dimensional cross-section or layer of the workpiece W being built. The directed energy source 24 emits a beam "B" and the beam steering apparatus 26 is used to steer the focal spot "S" of the build beam B over the exposed powder surface in an appropriate pattern. A small portion of exposed layer of the powder P surrounding the focal spot S, referred to herein as a "weld pool" 56 (best seen in FIG. 2) is heated by the build beam B to a temperature allowing it to melt, flow, and consolidate. As an example, the weld pool 56 may be on the order of 100 micrometers (0.004 in.) wide. This step may be referred to as fusing the powder P.

The build platform 20 is moved vertically downward by the layer increment, and another layer of powder P is applied in a similar thickness. The directed energy source 24 again emits a build beam B and the beam steering apparatus 26 is used to steer the focal spot S of the build beam B over the exposed powder surface in an appropriate pattern. The exposed layer of the powder P is heated by the build beam B to a temperature allowing it to fuse both within the top layer and with the lower, previously-solidified layer.

This cycle of moving the build platform 20, applying powder P, and then directed energy melting the powder P is repeated until the entire workpiece W is complete.

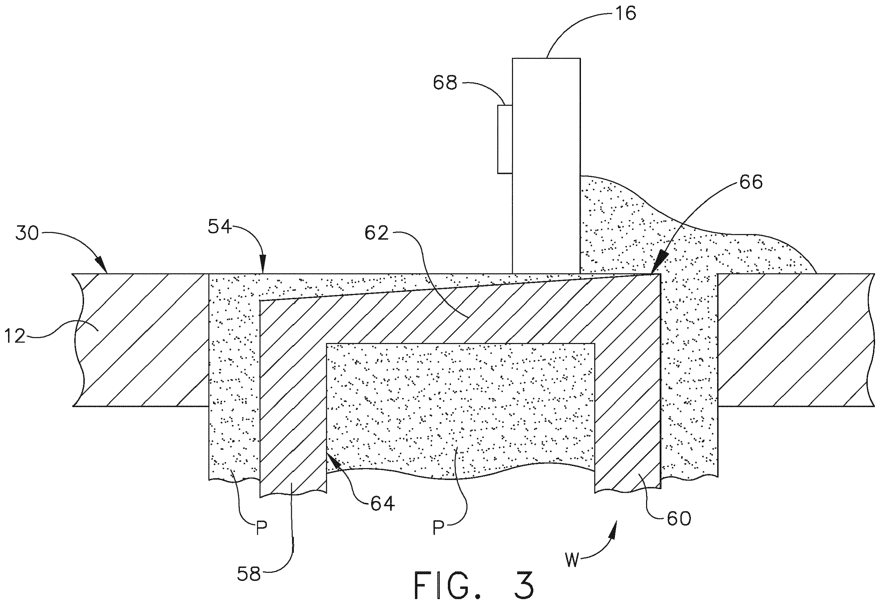

FIG. 3 shows in more detail a workpiece W being constructed in a powder bed of the type described above. The exemplary workpiece W includes a pair of spaced-apart vertical walls 58, 60 interconnected by horizontal wall 62. A cavity 64 is present between the vertical walls 58, 60 and is filled with powder P; additional powder P is present between the vertical walls 58, 60 and the side walls of the build chamber 22. The workpiece W is shown as having an exemplary defect 66 (specifically, a raised portion and/or protrusion caused by a high stress area). Non-limiting examples of types of defects that can be detected using this method include warping of the workpiece W, lifting of the workpiece W from the build platform 20, and uneven melting by the directed energy source 24. This particular defect 66 is caused by warping (high stress area) which causes a portion of the workpiece W to be located above the build surface 54.

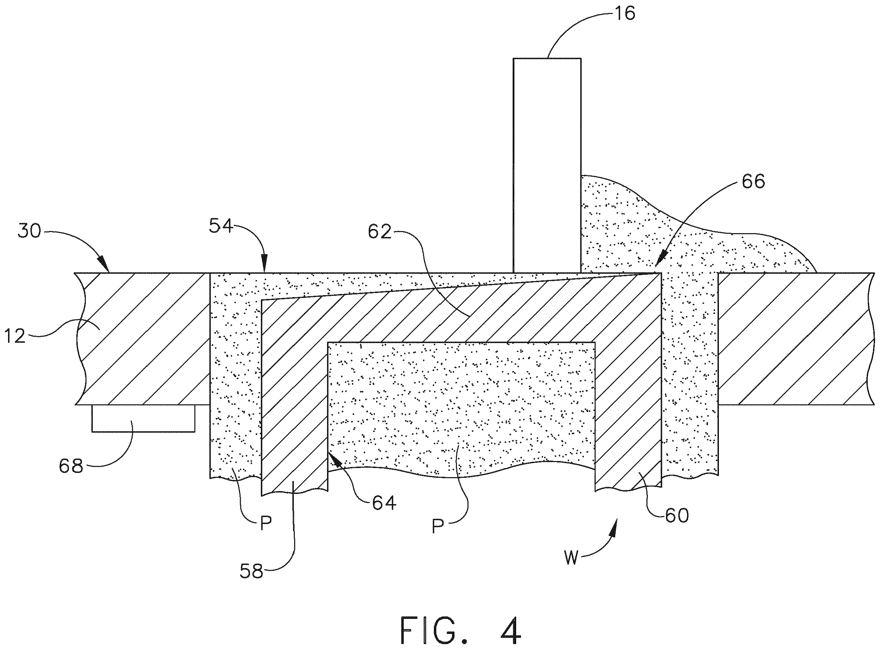

A real-time vibration monitoring process may be incorporated into the build process described above. Generally stated, the vibration monitoring process includes using a vibration sensor 68 (such as a transducer or microphone) to generate vibration signals during the recoating process and monitoring those signals for irregularities indicative of a defect in the workpiece W. The vibration sensor 68 may be mounted on and/or in the recoater 16 (FIG. 3) and/or table 12 (FIG. 4), or a chassis of the apparatus 10, to measure and record vibration signals during the recoating process.

During a typical recoating process, the recoater 16 slides across the worksurface 30 of the table 12 pushing powder over the build platform 20 to form a layer increment of powder to be melted by the directed energy source 24. If the workpiece W is properly formed, then the recoating process is smooth and very little variation occurs in the amount of vibration being induced by the recoating process. However, if the workpiece W experiences warpage, portions of the workpiece W may protrude upwardly, thereby causing a change in the amount of vibration being induced by the recoating process.

As illustrated in FIG. 3, in the most severe case, the workpiece W warps to a degree that a portion of the workpiece W protrudes in the Z direction above the build surface 54. As the recoater 16 spreads powder across the build platform 20, the recoater 16 makes contact with the workpiece W. In severe cases, such contact may cause damage to the workpiece W, recoater 16, and/or apparatus 10. More subtle cases may occur when the workpiece W has a smaller degree of warpage or when a directed energy source 24 provides for an uneven melting of the powder. In these cases, as the recoater 16 spreads powder across the build platform 20, the undulations and/or projections in an upper surface of the workpiece W can cause a change in vibration induced by the recoating process. This is true even when the upper surface of the workpiece W lies below a layer of powder, due to lubrication flow. By monitoring these vibrations, a user can determine if the workpiece W is not being properly formed.

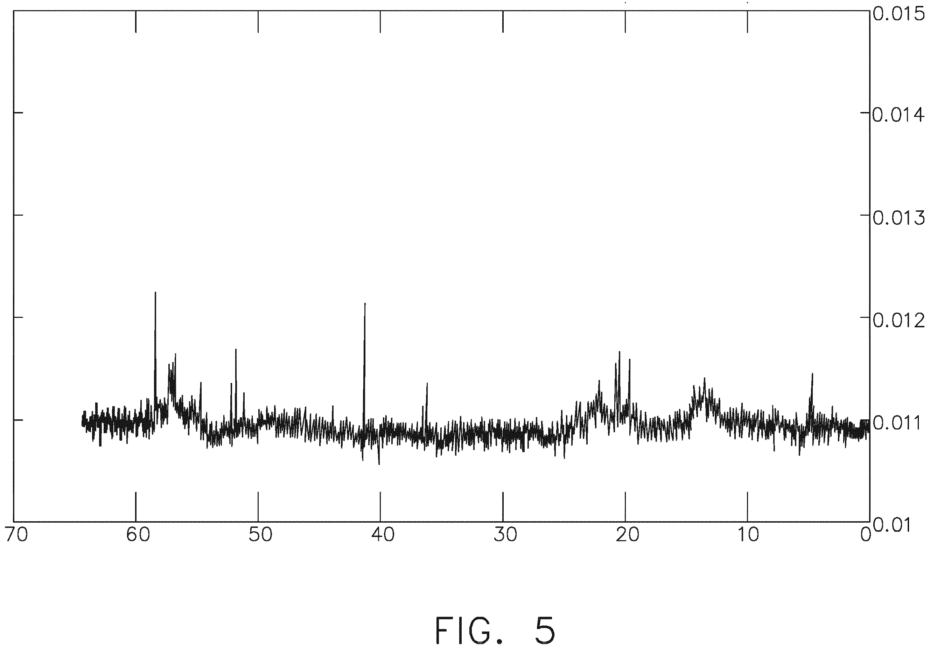

The vibration monitoring process uses a "known good" workpiece vibration signal profile as a comparison to provide vibration signal analysis. For each specific build (different sized and shaped workpieces) a new signal profile can be developed for comparison. Thus, a baseline signal profile may be developed for each increment layer of the build. This is done so that variations in vibrations due to a specific profile of a workpiece, as opposed to a defect, is taken into account. A non-limiting example of a known good signal profile, showing vibration amplitude versus time, is shown in FIG. 5.

As the build process for a workpiece W is conducted, the vibration sensor 68 measures vibration signals to be recorded for each increment layer of the build. These vibration signals are then compared to the known good signal profile for each build layer to determine if a defect such as warpage of the workpiece W is propagating (it should be appreciated that the vibration signal profile may be recorded at any suitable pre-determined interval of layer increments). The comparison may be conducted after the build process is complete, as a means of inspection and quality control. Alternatively, the comparison may take place in real time.

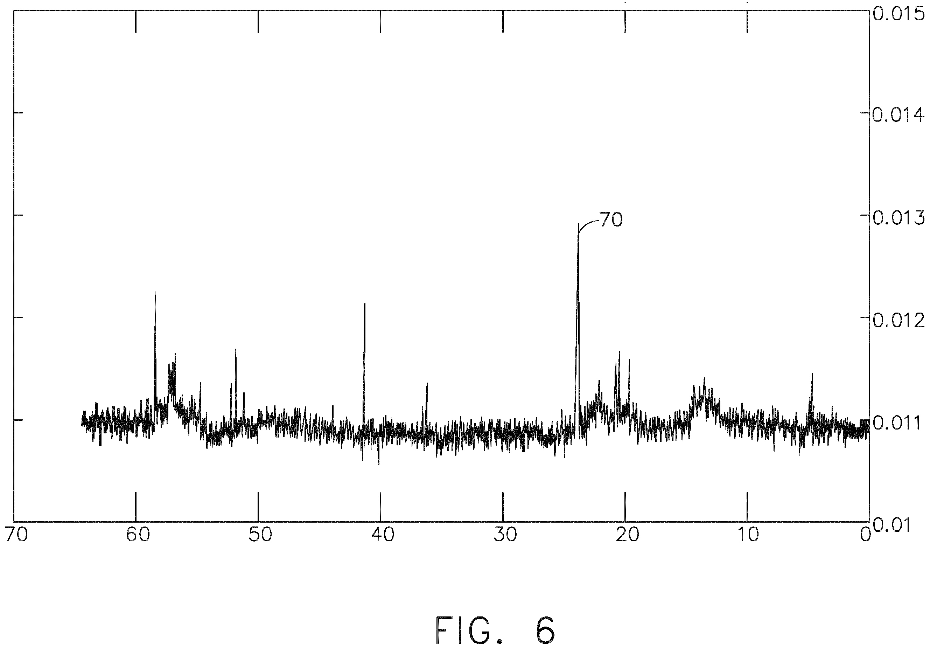

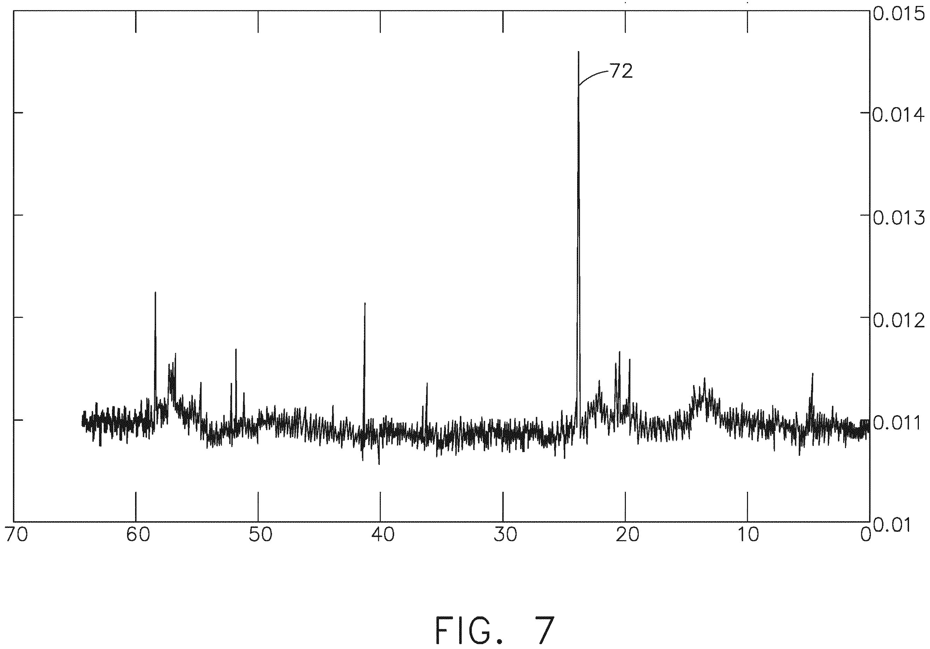

If the defect is in its beginning stages or is subtle, an example signal profile like that shown in FIG. 6 may occur. As shown, a small spike or peak 70 occurs indicating that a small defect is changing the vibration profile. Alternatively, if severe defect occurs (for example, causing contact with the recoater 16), an example signal profile like that shown in FIG. 7 may occur, showing a significant spike or peak 72.

By monitoring the vibration signal profile for each build process and comparing the signal profile to the known good signal profile, a defect in the build process can be detected at an early stage of the build process. This enables the possibility of corrective actions such as: (1) stopping the build process before damage to the workpiece W, the recoater 16, and/or the apparatus 10 occurs due to contact between the workpiece W and the recoater 16; (2) allowing an operator to perform quality control during the build by observing the signal spikes and determining if the spikes are below a pre-determined vibration threshold; and (3) using the apparatus 10 to repair the defect, by directing the build beam B to the workpiece W over the defect, creating a weld pool which re-melts the material and permits it to flow into and fill the defect.

In addition to or as an alternative to the discrete actions described above, the vibration monitoring process may be used to provide real-time feedback which can be used to modify the additive build process. For example, if the inspection process determines that the build is creating defects, one or more process parameters such as directed energy source power level, beam scan velocity, beam scan pattern, beam pulse length, or beam pulse frequency, may be changed to restore performance to nominal or eliminate the source of defects.

The vibration monitoring process described above may also be used as part of a plan of statistical process control. In particular, the inspection process which could be used to identify sources of variation in the process. Process parameters could then be altered in subsequent builds to reduce or eliminate sources of variation.

The foregoing has described a real-time vibration monitoring process for an additive manufacturing process. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends any novel one, or any novel combination, of the features disclosed in this specification (including any accompanying potential points of novelty, abstract and drawings), or to any novel one, or any novel combination, of the steps of any method or process so disclosed.

## Claims

1. A method of monitoring an additive manufacturing process in which a layer of powdered material is deposited in a recoating process so as to define a build surface (54), and a directed energy source (24) is used to selectively fuse the powdered material to form a workpiece (W), the method comprising:
measuring a vibration signal profile generated by the recoating process; and
controlling at least one aspect of the additive manufacturing process in response to the measured vibration signal profile.

2. The method of claim 1 further comprising comparing the measured vibration signal profile to a baseline vibration signal profile.

3. The method of claim 2 wherein the baseline signal profile is representative of a known good workpiece (W).

4. The method of claim 2 wherein the step of controlling includes taking a discrete action in response to the vibration signal profile deviating from the baseline profile.

5. The method of claim 4 wherein the discrete action is stopping the additive manufacturing process.

6. The method of claim 1 further comprising comparing the measured vibration signal profile to a baseline vibration signal profile and identifying a defect (66) in workpiece (W) based on the comparison.

7. The method of claim 6 further comprising repairing the defect (66), by using the directed energy source (24) to melt material and permitting the material to flow into and fill the defect (66).

8. The method of claim 7 wherein the material is a previously fused portion of the workpiece (W).

9. The method of claim 1 wherein the step of controlling includes changing at least one process parameter of the additive manufacturing process.

10. The method of claim 9 wherein the controlled process parameter includes at least one of: directed energy source (24) power level, beam scan velocity, beam scan pattern, beam pulse length, and beam pulse frequency.

11. The method of claim 1 wherein the powder is deposited by a recoater arm (16) moving over a worksurface (30), the vibration signal being generated by interaction of the recoater arm (16) with the powdered material.

12. The method of claim 1 wherein the vibration signal profile is measured using a vibration sensor (68) mounted to a machine used to perform the additive manufacturing process.

13. The method of claim 1 wherein:
the powdered material is deposited using a moving recoater arm (16); and
the vibration signal is generated by interaction of the recoater arm (16) with the powdered material.

14. The method of claim 1 further comprising repeating in a cycle the steps of depositing and fusing to build up the workpiece (W) in a layer-by layer fashion.
